# EUROPÄISCHE PATENTSCHRIFT

(11) **EP 3 986 695 B1**
(45) Veröffentlichungstag und Bekanntmachung des Hinweises auf die Patenterteilung: **12.06.2024**
(21) Anmeldenummer: 21743149.3
(22) Anmeldetag: 08.07.2021
(51) Int. Cl.: B29C 51/34, B29C 51/10, B29C 51/04, B29C 51/30, B29C 51/32, B29C 51/44, B29L 31/00

(54) **FORMWERKZEUG UND FORMVERFAHREN ZUR ERZEUGUNG VON BEHÄLTERN MIT HINTERSCHNITTEN**
MOLDING TOOL AND MOLDING METHOD FOR PRODUCING CONTAINERS WITH UNDERCUTS
OUTIL DE MOULAGE ET PROCEDE DE MOULAGE POUR LA FABRICATION DE RÉCIPIENTS AVEC CONTRE-DEPOUILLE

(30) Priorität: 10.07.2020 DE 102020118217
(43) Veröffentlichungstag der Anmeldung: 27.04.2022
(73) Patentinhaber: Marbach Werkzeugbau GmbH, 74080 Heilbronn (DE)
(72) Erfinder: WEIBLER, Klaus, 74626 Bretzfeld-Bitzfeld (DE); FRANK, Matthias, 74226 Nordheim (DE); HÄFNER, Andreas, 74078 Heilbronn (DE)
(74) Vertreter: Lambacher, Michael
(86) Internationale Anmeldenummer: PCT/EP2021/069026
(87) Internationale Veröffentlichungsnummer: WO 2022/008672

(56) Entgegenhaltungen:
- EP-A1- 1 361 036
- US-A- 3 341 893
- US-A1- 2007 252 307

## Beschreibung

### Technisches Gebiet

Die Erfindung betrifft ein Formwerkzeug, insbesondere ein Thermoformwerkzeug, eine Verwendung eines derartigen Formwerkzeugs sowie ein Verfahren zum Herstellen eines Behälters aus einer flächenförmigen Materialbahn.

### Stand der Technik

Aus dem Stand der Technik sind Formwerkzeuge bzw. Umformwerkzeuge bekannt, welche dazu ausgelegt sind, flächenförmige (plane) Materialbögen bzw. Materialbahnen in dreidimensionale Behälter, wie beispielsweise Becher, Schalen oder Kapseln, umzuformen. Derartige Artikel werden beispielsweise in der Lebensmittelindustrie eingesetzt, um Lebensmittel zu verpacken. Die Behälter können hierbei aus Kunststoffmaterial oder einem anderweitigen Material, wie beispielsweise Blech oder Zellstoff, hergestellt sein.

Für die Herstellung von Kunststoffbehältern wird häufig das Thermoformen eingesetzt. Thermoformverfahren sowie Thermoformwerkzeuge zur Herstellung von Kunststoffbehältern werden beispielsweise in der EP 1 541 320 A1, EP 1 163 996 B1 und DE 10 2016 103 237 A1 beschrieben. Derartige Thermoformwerkzeuge umfassen ein Werkzeugoberteil und ein Werkzeugunterteil, die zueinander koaxial angeordnet sind und entlang der gemeinsamen Achse bewegbar sind. Das Werkzeugoberteil weist hierbei wenigstens einen Niederhalter und einen darin verschiebbar gelagerten Vorstrecker auf. Das Werkzeugunterteil weist eine Formeinrichtung mit wenigstens einem Formeinsatz und einem Formboden auf. In der EP 1 163 996 B1 wird ein in axialer Richtung verschiebbarer, zweiteiliger Formboden zur Formung eines Behälters mit Hohlboden gelehrt. Unabhängig von der konkreten Ausgestaltung des Formbodens sind Formeinsatz und Formboden derart ausgestaltet und angeordnet, dass sie zusammen einen Formraum (Hohlraum) mit Formseitenwand und Formboden bilden, welche die Form des zu formenden Behälters nachbilden.

Bei einem Thermoformprozess wird zunächst eine thermoplastische Kunststofffolie erwärmt und zwischen dem Werkzeugoberteil und Werkzeugunterteil angeordnet. Die beiden Werkzeugteile werden daraufhin geschlossen (d.h. aufeinander zubewegt). Mit dem Vorstrecker wird die erwärmte Kunststofffolie in den Formraum gedrückt und dadurch vorgeformt. Zur vollständigen Ausformung wird Druckluft (auch Formluft genannt) in den Formraum eingeleitet und/oder ein Unterdruck (Vakuum) im Formraum erzeugt. Dadurch wird die vorgeformte Folie weiter gegen die Formseitenwand (gebildet durch die Innenwand des Formeinsatzes) und den Formboden gedrückt. Die dadurch vollständig ausgeformte Kunststofffolie wird anschließend abgekühlt, wodurch ein Behälter mit starrer Wandung entsteht. Der Behälter wird dann von der Formseitenwand und dem Formboden gelöst (entformt). Diese Entformung kann mechanisch erfolgen, beispielsweise durch leichtes Anheben des Formbodens in den Formraum hinein (also Anheben des Formbodens entgegen der Formrichtung). Die Hubbewegung bewirkt in der Regel, dass sich der Behälter von der Formseitenwand vollständig löst. Im Anschluss kann durch weiteres Anheben des Formbodens der Behälter aus dem Formraum entfernt (ausgeworfen) werden.

Thermoformwerkzeuge und Thermoformverfahren haben im Vergleich zu anderen Herstellungstechniken, wie beispielsweise Spritzgussverfahren, den Vorteil, dass die Werkzeuge in der Regel mit einer Vielzahl von nebeneinander angeordneten Formeinsätzen bestückt werden können. Somit können mehrere Behälter in einem Formzyklus erzeugt werden. Außerdem sind die Formzykluszeiten kurz, wodurch ein hoher Durchsatz an Behältern erreicht werden kann. Nachteilig ist jedoch, dass Thermoformwerkzeuge und Thermoformverfahren nur bedingt geeignet sind, Behälter mit Hinterschnitten herzustellen. Beispielsweise ist es nur schwer möglich, Behälter mit in Umfangsrichtung des Behälters durchgehend verlaufenden Hinterschnitten prozesssicher herzustellen. Derartige Hinterschnitte können zum einen zum Zweck der Behälterstapelung in der Nähe der Behälteröffnung und/oder des Behälterbodens, zum anderen zur Erhöhung der Becherstabilität wünschenswert sein. Sind die Hinterschnitte zu groß bzw. zu markant ausgeprägt, wird es schwierig, die Behälter zu entformen, ohne sie dabei zu zerstören.

Aus der DE 3 420 551 C2 ist ein Formwerkzeug zur Herstellung von stapelbaren Behältern aus Kunststofffolie bekannt, das in Umfangsrichtung des Behälters begrenzt ausgebildete Hinterschnitte aufweist. Das Formwerkzeug weist einen im Wesentlichen kegelstumpfförmigen Formraum auf. Dieser wird durch einen Formboden, der mit einem Auswerfer gekoppelt ist, und einen Formeinsatz, dessen Innenfläche die Formseitenwand bildet, definiert. Der Formeinsatz weist an seinem dem Formboden zugewandten axialen Ende mehrere in Umfangsrichtung zueinander beabstandet angeordnete Vorsprünge auf, die in den Formraum radial hineinragen. Durch diese Vorsprünge ist es möglich, Behälter mit in Umfangsrichtung lokal ausgebildeten Hinterschnitten zu erzeugen. Die Vorsprünge sind über eine Schieber- und Exzentereinrichtung radial bewegbar (siehe insbesondere Figur 3 der DE 3 420 551 C2) und können radial nach außen vom Formraum wegbewegt werden, um die Entformung des Behälters zu ermöglichen. Das in der DE 3 420 551 C2 beschriebene Umformwerkzeug mit Exzenter- und Schiebertechnologie ist jedoch aufwändig zu realisieren und diese Technologie erfordert einen großen Einbauraum. Außerdem ist eine Herstellung von Behältern mit in Umfangsrichtung durchgehend umlaufenden Hinterschnitten nicht möglich.

Aus der US 3 341 893 A sind ferner ein Verfahren und eine Vorrichtung für das Thermoformen von Kunststoffbehältern bekannt, die an ihren Seitenwänden Rippen aufweisen. Das Unterwerkzeug des Thermoformwerkzeugs weist einen Formeinsatz mit in axialer Richtung drei unterschiedlich ausgebildeten Formbereichen auf. Der obere Formbereich ist stationär ausgebildet, während der mittlere Formbereich zur Erzeugung der Rippen im Behälter vorgesehen ist und hierfür radial nach beweglich gelagert ist. Der untere Formbereich ist axial beweglich gelagert. Zur Entformung eines im Formeinsatz ausgeformten Behälters wird der mittlere Formbereich radial nach außen bewegt, um den mit Rippen versehenen Behälterbereich freizugeben. Ferner kann der untere Formbereich abgesenkt werden.

Aus der US 2007/252307 A1 ist ferner ein Thermoformwerkzeug mit einem Formeinsatz bekannt, der einen stationär gelagerten oberen Formbereich, einen axial beweglichen unteren Formbereich und einen Formboden aufweist. Zur Behälterentformung wird der axial bewegliche untere Formbereich zusammen mit dem darin aufgenommenen Formboden axial nach unten bewegt.

Aufgabe der vorliegenden Erfindung ist es, eine Technik bereitzustellen, welche die oben beschriebenen Nachteile überwindet. Insbesondere ist es Aufgabe der vorliegenden Erfindung, ein Formwerkzeug und ein Formverfahren bereitzustellen, die es ermöglichen, Behälter mit Hinterschnitten, insbesondere mit in Umfangsrichtung durchgehend umlaufenden Hinterschnitten, herzustellen.

### Kurzer Abriss

Zur Lösung der obengenannten Aufgabe wird gemäß einem ersten Aspekt ein Formwerkzeug, insbesondere ein Thermoformwerkzeug, zur Erzeugung eines Behälters bereitgestellt. Das Formwerkzeug umfasst einen Formboden und einen den Formboden aufnehmenden Formeinsatz, wobei der Formeinsatz aus wenigstens zwei Formeinsatzteilen aufgebaut ist, die zusammen mit dem Formboden einen Formraum definieren (bzw. begrenzen), der zur Umformung einer flächenförmigen Materialbahn zu einem Behälter vorgesehen ist. Ein erstes Formeinsatzteil der wenigstens zwei Formeinsatzteile ist im Formwerkzeug stationär gelagert und ein zweites Formeinsatzteil der wenigstens zwei Formeinsatzteile ist im Formwerkzeug axial bewegbar (verschiebbar) gelagert. Ferner ist der Formboden axial bewegbar an einem dem zweiten Formeinsatzteil abgewandten axialen Ende des ersten Formeinsatzteils aufgenommen, so dass der Formboden und das zweite Formeinsatzteil relativ zum ersten Formeinsatzteil axial bewegbar sind, um einem im Formraum ausgeformten Behälter zu entformen.

Der Formraum ist im Inneren des Formeinsatzes ausgebildet. Zur Bildung des Formraums weist der Formeinsatz eine sich in axialer Richtung des Formeinsatzes erstreckende Forminnenwand auf, welche eine Formseitenwand des Formraums bildet. Gemäß einer Implementierung kann der Formeinsatz als Formhülse mit einer sich in axialer Richtung erstreckende Forminnenwand ausgebildet sein. Der Formboden ist an einem axialen Ende des Formeinsatzes (bzw. der Formhülse) angeordnet bzw. wird von diesem aufgenommen. Je nach Ausgestaltung des Formwerkzeugs kann der Formeinsatz in einem Werkzeugunterteil oder Werkzeugoberteil des Formwerkzeugs aufgenommen sein.

Der Formraum ist ein Hohlraum, welcher durch den Formeinsatz bzw. dessen Forminnenwand sowie den Formboden in axialer und radialer Richtung begrenzt ist. Die Form der Formbodenoberfläche sowie der Formseitenwand definiert die Form des Formraums und somit auch die Form des zu erzeugenden Behälters.

Mit flächenförmiger Materialbahn kann eine Folie aus Kunststoff (im Folgenden kurz Kunststofffolie genannt) oder eine anderweitige Materialfolie oder Materiallage gemeint sein, die dazu ausgelegt ist, durch Einwirkung von äußeren Kräften (mechanisch, durch Einsatz eines Vorstreckers und/oder pneumatisch durch Anlegen von Druckluft und/oder Vakuum) in eine dreidimensionale Form überführt zu werden. Insbesondere kann eine thermoplastische Kunststofffolie bei der Erzeugung des Behälters zum Einsatz kommen.

Mit stationär gelagert ist gemeint, dass das erste Formeinsatzteil (bzw. das erste Formhülsenteil) unbeweglich im Formwerkzeug gelagert ist. Mit anderen Worten ist das erste Formeinsatzteil weder in axialer Richtung noch in radialer Richtung bewegbar.

Das erste Formeinsatzteil und das zweite Formeinsatzteil können koaxial entlang einer gemeinsamen Achse angeordnet sein. Die gemeinsame Achse kann eine Rotationsachse des durch den Formeinsatz bzw. das erste und zweite Formeinsatzteil gebildeten Hohlraums sein.

Das zweite Formeinsatzteil (bzw. das zweite Formhülsenteil) kann derart bezüglich des ersten Formeinsatzteils axial (also entlang der gemeinsamen Achse) bewegbar gelagert sein, dass das zweite Formeinsatzteil wahlweise zwischen einer Formposition und einer Entformungsposition hin und her bewegbar ist. Mit Formposition ist jene Position des bewegbar gelagerten zweiten Formeinsatzteils gemeint, welche das zweite Formeinsatzteil während der Erzeugung (Formung) eines Behälters einnimmt. In der Formposition kann das zweite Formeinsatzteil (im Wesentlichen) nahtlos in das zweite Formeinsatzteil übergehen. Mit anderen Worten sind das erste Formeinsatzteil und das zweite Formeinsatzteil in der Formposition derart zueinander positioniert, dass sie (im Wesentlichen) nahtlos ineinander übergehen und somit einen einheitlichen Formraum bilden.

Mit Entformungsposition ist jene Position des bewegbar gelagerten zweiten Formeinsatzteils gemeint, welche das zweite Formeinsatzteil bei der Entformung einnimmt. In der Entformungsposition kann das zweite Formeinsatzteil um einen vorgegebenen Betrag bezüglich des ersten Formeinsatzteils axial verschoben sein. Mit anderen Worten kann in der Entformungsposition das zweite Formeinsatzteil um einen vorgegebenen Betrag axial beabstandet zum ersten Formeinsatzteil angeordnet sein. Die axiale Verschiebung des zweiten Formeinsatzteils relativ zum ersten Formeinsatzteil kann die Entformung eines Behälters unterstützen. Dies gilt insbesondere dann, wenn das erste Formeinsatzteil Ausformungen aufweist, die zur Erzeugung von Hinterschnitten im Behälter ausgebildet sind.

Das erste Formeinsatzteil kann eine erste Formseitenwand und das zweite Formeinsatzteil eine zweite Formseitenwand aufweisen. Die beiden Formseitenwände können derart ausgebildet und aufeinander abgestimmt sein, dass sie in der Formposition (im Wesentlichen) nahtlos ineinander übergehen. Es entsteht so in der Formposition ein Formraum mit einheitlicher Formseitenwand.

Beim Übergang von der Formposition in die Entformungsposition kann die zweite Formseitenwand um einen vorgegebenen Betrag relativ zur ersten Formseitenwand axial verschoben werden. Durch die axiale Verschiebung der zweiten Formseitenwand relativ zur ersten Formseitenwand kann eine Entformung des Behälters entlang seiner Seitenwand (aktiv) unterstützt werden. Dies ist insbesondere dann von Vorteil, wenn entlang der Behälterseitenwand Hinterschnitte (Hinterschneidungen) ausgebildet sind.

Das erste Formeinsatzteil und/oder zweite Formeinsatzteil kann/können einen sich in Umlaufrichtung erstreckenden Hinterschnitt aufweisen. Der Hinterschnitt kann an den jeweiligen Formseitenwänden in Form einer in Umfangsrichtung durchgehend umlaufenden Wandausbuchtung realisiert sein.

Gemäß einer Implementierung kann das zweite Formeinsatzteil ferner an seinem dem ersten Formeinsatzteil abgewandten axialen Ende nach außen abgerundet ausgebildet sein. Durch die Abrundung kann ein umlaufender Hinterschnitt im Bereich des Siegelrands bzw. der Öffnung des Behälters erzeugt werden. Insbesondere kann durch diese Abrundung und die axiale Verschiebung des zweiten Formeinsatzabschnitts die Entformung des Behälters im Bereich des Hinterschnitts unterstützt werden.

Der Formboden ist an einem dem zweiten Formeinsatzteil abgewandten axialen Ende im ersten Formeinsatzteil axial bewegbar (verschiebbar) aufgenommen. Der Formboden kann im Formwerkzeug derart gelagert sein, dass er zusammen mit dem zweiten Formeinsatzteil zwischen der Entformungsposition und Formposition hin und her bewegbar ist. Der axial beweglich gelagerte Formboden und das zweite Formeinsatzteil können hierbei synchron (gleichzeitig) zwischen der Formposition und der Entformungsposition hin und her bewegt werden. Auf diese Weise kann eine gleichmäßige und schonende Entformung des Behälters in der Nähe des Behälterbodens und entlang der Behälterseitenwand erreicht werden. Dies ist insbesondere vorteilhaft für Behälter mit hohen Behälterseitenwänden und darin realisierten Hinterschnitten. Auf diese Weise ist es möglich, die durch eine Entformungsbewegung auftretenden Entformungskräfte nicht nur auf den Behälterboden zu konzentrieren, sondern gleichmäßiger über den Behälter zu verteilen, wodurch das Risiko einer Zerquetschung (Stauchung) des Behälters aufgrund der auftretenden Entformungskräfte stark verringert wird.

Alternativ zur oben beschriebenen synchronen Bewegung ist auch eine asynchrone (also nicht gleichzeitige) Bewegung von Formboden und zweitem Formeinsatzteil in axialer Richtung zwischen der Formposition und Entformungsposition denkbar. Mit anderen Worten können der Formboden und das zweite Formeinsatzteil asynchron zueinander in axialer Richtung bewegt werden. Beispielsweise kann der Formboden und das zweite Formeinsatzteil derart zueinander in axialer Richtung bewegt werden, dass das zweite Formeinsatzteil in seiner axialen Entformungsbewegung dem Formboden zeitlich (beispielsweise um einen vorgegebenen Zeitbetrag) vorauseilt oder nachläuft. Ein zeitliches Vorauseilen des zweiten Formeinsatzteils kann beispielsweise erreicht werden, indem das zweite Formeinsatzteil um einen vorgegebenen Zeitbetrag früher bewegt (betätigt) wird als der Formboden. Ein zeitliches Nachlaufen des zweiten Formeinsatzteils kann beispielsweise erreicht werden, indem das Formeinsatzteil um einen vorgegeben Zeitbetrag zeitverzögert zur Bewegung (Betätigung) des Formbodens bewegt (betätigt) wird. Denkbar ist auch eine Bewegung von Formboden und zweitem Formeinsatzteil mit unterschiedlichen Geschwindigkeiten, so dass aufgrund des Geschwindigkeitsunterschieds zwischen Formboden und zweitem Formeinsatzteil das zweite Formeinsatzteil dem Formboden entweder vorauseilt oder nachläuft. Der Zeitbetrag bzw. Geschwindigkeitsunterschied kann hierbei abhängig von der Dimension und Geometrie des zu entformenden Behälters so gewählt werden, dass eine schonende und optimale Entformung des Behälters in der Nähe des Behälterbodens und entlang der Behälterseitenwand erreicht wird.

Gemäß einer Implementierung kann das Formwerkzeug ferner eine Betätigungseinrichtung umfassen, welche zur wahlweisen axialen Bewegung (Verschiebung) des zweiten Formeinsatzteils zwischen der Formposition und Entformungsposition vorgesehen ist. Die Betätigungseinrichtung kann hierbei dazu ausgebildet sein, das zweite Formeinsatzteil zwischen der Formposition und der Entformungsposition hin und her zu verschieben. Gemäß einer Variante kann die Betätigungseinrichtung eine pneumatische oder hydraulische Betätigungseinrichtung sein. Ferner kann gemäß einer Implementierung der Formboden mit der Betätigungseinrichtung gekoppelt sein, so dass bei Betätigung des zweiten Formeinsatzteils der Formboden (in axialer Richtung) synchron mitbewegt wird. Gemäß einer alternativen Implementierung kann die Betätigungseinrichtung dazu ausgebildet sein, den Formboden derart zu betätigen, dass der Formboden sich asynchron zum zweiten Formeinsatzteil in axialer Richtung bewegt. In beiden Implementierungen (also synchrone und asynchrone Bewegung von Formboden und zweitem Formeinsatzteil) kann die Betätigungseinrichtung dazu ausgebildet sein, das zweite Formeinsatzteil und den Formboden bei der Entformung des Behälters in dieselbe axiale Richtung (beispielsweise entgegen der Formrichtung) zu bewegen. Mit Formrichtung ist hierbei jene Richtung innerhalb des Formwerkzeugs gemeint, welche durch den gerichteten Umformprozess der flächenförmigen Materialbahn zu einem dreidimensionalen Behälter unter Zuhilfenahme eines Vorstreckers und/oder Druckluft definiert wird.

Der Formboden kann ferner mit einer Auswerfereinrichtung gekoppelt sein. Die Auswerfereinrichtung kann dazu ausgebildet sein, nach Entformung des Behälters den Formboden weiter in Richtung des Formraums (also entgegen der Formrichtung in Richtung der Auswerfposition) zu bewegen, um den Behälter auszuwerfen.

Die Auswerfereinrichtung kann ferner dazu ausgebildet sein, den Formboden in seine Ausgangsposition (Formposition) zurückzubewegen. Durch die Rückbewegung des Formbodens kann dieser das zweite Formeinsatzteil von seiner Entformungsposition in die Formposition bringen, sofern das zweite Formeinsatzteil über die Betätigungseinrichtung mit dem Formboden gekoppelt ist.

Der Formeinsatz sowie der in dem ersten Formeinsatzteil bewegbar aufgenommene Formboden können Teile eines Werkzeugunterteils des Formwerkzeugs sein. Ferner kann das Formwerkzeug ein mit dem Werkzeugunterteil zusammenwirkendes Werkzeugoberteil aufweisen. Das Werkzeugoberteil kann ferner wenigstens einen Niederhalter sowie einen in dem Niederhalter bewegbar gelagerten Vorstrecker aufweisen. Der Vorstrecker kann dazu ausgebildet sein, die umzuformende Folie in Richtung des Formraums vorzustrecken. Durch den Vorstreckvorgang wird die Folie in einen Formling umgeformt, welcher eine vorläufige Zwischenform aufweist, die noch nicht der durch den Formeinsatz und Formboden vorgegebenen Behälterform entspricht. Durch Anlegen von Druckluft und/oder Vakuum kann der Formling weiter in die endgültige Behälterform umgeformt werden, indem mittels Druckluft und/oder Vakuum der vorgeformte Materialbogen in Anlage mit der Bodenoberfläche und der Formseitenwand des Formeinsatzes gebracht wird.

Gemäß einem weiteren Aspekt wird eine Formmaschine, insbesondere eine Thermoformmaschine, bereitgestellt, welche das hier beschriebene Formwerkzeug umfasst. Die Thermoformmaschine kann eine Formstation umfassen, in der das Formwerkzeug eingebaut ist.

Gemäß einem weiteren Aspekt wird eine Verwendung des hier beschriebenen Formwerkzeugs zur Herstellung eines Behälters aus einer flächenförmigen Materialbahn, insbesondere aus einer thermoplastischen Kunststofffolie, bereitgestellt.

Gemäß einem weiteren Aspekt wird ein Verfahren zum Herstellen eines Behälters aus einer flächenförmigen Materialbahn bereitgestellt, wobei das Verfahren folgende Schritte umfasst: Bereitstellen eines Formwerkzeugs, wobei das Formwerkzeug einen Formboden, ein erstes Formeinsatzteil und ein zweites Formeinsatzteil umfasst, die einen Formraum mit einer Formseitenwand bilden, wobei der Formboden an einem dem zweiten Formeinsatzteil abgewandten axialen Ende des ersten Formeinsatzteils axial bewegbar aufgenommen ist; Positionieren des zweiten Formeinsatzteils und des Formbodens des Formwerkzeugs in einer Formposition, um eine Formung des Behälters zu ermöglichen; Formen des Behälters, indem eine flächenförmige Materialbahn in den Formraum des Formwerkzeugs hineingeformt (tiefgezogen) wird, bis sie an dem Formboden und der Formseitenwand des Formeinsatzes anliegt; und axiales Bewegen (Verschieben) des Formbodens und des zweiten Formeinsatzteils relativ zum ersten Formeinsatzteil, um den im Formraum ausgeformten Behälter zu entformen.

Das bereitgestellte Formwerkzeug kann ein Formwerkzeug oder ein kombiniertes Form- und Stanzwerkzeug sein, wie oben beschrieben. Insbesondere können der Formboden und das zweite Formeinsatzteil synchron oder asynchron um einen vorgegebenen Betrag in axialer Richtung bewegt (verschoben) werden, um den Behälter zu entformen. Die synchrone oder asynchrone Bewegung (Verschiebung) kann durch eine gemeinsame (pneumatische oder hydraulische) Betätigungseinrichtung oder durch zwei separate (pneumatische oder hydraulische) Betätigungseinrichtungen erreicht werden. Formboden und zweites Formeinsatzteil können bei der Entformung axial in dieselbe Richtung bewegt werden. Die axiale Entformungsbewegung von Formboden und zweitem Formeinsatzteil ist bevorzugt zur Formrichtung des zu formenden Behälters entgegengesetzt.

Nach Erreichen der Entformungsstellung kann der Formboden weiter in Richtung des Formraums bewegt werden, um den entformten Behälter auszuwerfen. Diese Auswurfbewegung kann durch eine weitere Betätigungseinrichtung, wie beispielsweise eine Auswerfereinrichtung, realisiert werden.

### Kurze Beschreibung der Zeichnungen

Weitere Einzelheiten und Vorteile der Erfindung werden anhand der nachfolgenden Zeichnungen erläutert. Es zeigen:
- Figur 1: eine Schnittansicht eines beispielhaften Formwerkzeugs gemäß der vorliegenden Erfindung nach einer Formung eines Behälters;
- Figur 2: eine Schnittansicht des Formwerkzeugs gemäß der Figur 1 während einer Entformung des Behälters;
- Figur 3: eine weitere Schnittansicht des Formwerkzeugs gemäß der Figur 1 während eines Auswurfs des Behälters; und
- Figur 4: ein Flussdiagramm, das ein Verfahren zur Herstellung eines Behälters mit einem Formwerkzeug wie in Zusammenhang mit den Figuren 1 bis 3 dargestellt, beschreibt.

### Detaillierte Beschreibung

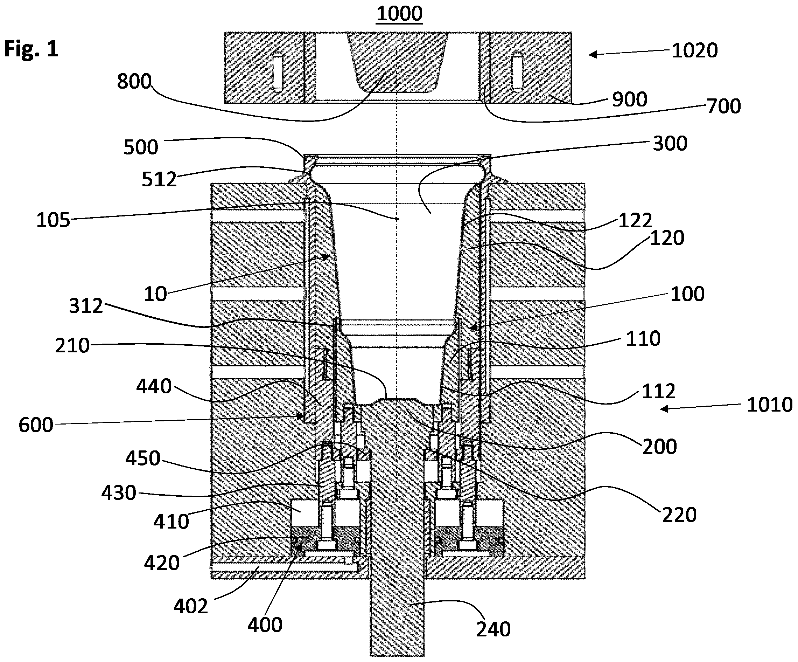

In Zusammenhang mit den Figuren 1 bis 3 wird nun ein erfindungsgemäßes Formwerkzeug zur Herstellung (Formung) eines Behälters 10 weiter beschrieben. Das Formwerkzeug 1000 ist als Thermoformwerkzeug realisiert und kann in einer Thermoformmaschine, genauer gesagt, in einer Form- und Stanzstation einer Thermoformmaschine, eingebaut sein.

In Zusammenhang mit der Figur 1 wird das Formwerkzeug 1000 nun näher beschrieben. Das Formwerkzeug 1000 umfasst einen Formeinsatz 100. Der Formeinsatz 100 ist in der vorliegenden Implementierung zweiteilig ausgebildet und umfasst ein erstes Formeinsatzteil 110 sowie ein zweites Formeinsatzteil 120. Das erste Formeinsatzteil 110 ist hülsenförmig ausgebildet und weist eine eine erste Formseitenwand 112 bildende erste Innenwand auf. Das zweite Formeinsatzteil 120 ist ebenso hülsenförmig ausgebildet und weist eine zweite Formseitenwand 122 bildende zweite Innenwand auf. Ferner umfasst das Formwerkzeug 1000 einen Formboden 200, der, wie nachfolgend noch näher beschrieben wird, im Formeinsatz 100, genauer gesagt, im ersten Formeinsatzteil 110 beweglich aufgenommen ist.

Der Formboden 200 bildet zusammen mit dem ersten Formeinsatzteil 110 und dem zweiten Formeinsatzteil 120 einen Hohlraum, der als Formraum 300 fungiert. Genauer gesagt wird durch die erste Formseitenwand 112, die zweite Formseitenwand 122 und die innenliegende Formbodenwand 210 der Formraum 300 definiert, in welchen eine Materialbahn hineinformbar ist, um einen dreidimensionalen Behälter 10 zu formen. Als Materialbahn kann eine thermoplastische Folie zum Einsatz kommen, die vor dem Umformprozess erwärmt wird.

Das erste Formeinsatzteil 110 und das zweite Formeinsatzteil 120 sind entlang einer gemeinsamen Achse 105 koaxial angeordnet. Die gemeinsame Achse 105 ist in der Figur 1 angedeutet und entspricht der Rotationsachse des durch das erste Formeinsatzteil 110 und das zweite Formeinsatzteil 120 gebildeten Formraums 300. Wesentlich für die Erfindung ist, dass das zweite Formeinsatzteil 120 im Formwerkzeug 1000 beweglich gelagert ist und in axialer Richtung (also entlang der Achse 105) hin und her bewegbar ist. Hingegen ist das erste Formeinsatzteil 110 im Formwerkzeug 1000 stationär gelagert und bewegt sich nicht.

In der in Figur 1 gezeigten Implementierung weist das Formwerkzeug 1000 ferner einen Schnittstempel 500 auf, welcher den Formraum 300 an dem Formboden 200 gegenüberliegenden axialen Ende (axialen oberen Ende) des zweiten Formeinsatzteils 120 fortsetzt. Der Schnittstempel 500 ist hülsenförmig ausgebildet. An seiner Innenwand weist er eine Ausbuchtung 512 auf, die in Umfangsrichtung verläuft und zusammen mit der nach außen gekrümmten Formseitenwand am oberen axialen Ende des zweiten Formeinsatzteils 120 einen Hinterschnitt bildet. Dieser ist in Umfangsrichtung durchgehend ausgebildet. Es versteht sich, dass die hier in Zusammenhang mit der Figur 1 beschriebene Ausgestaltung des Schnittstempels 500 für die Erfindung nicht wesentlich ist und in anderen Formwerkzeugen auch anders ausgebildet sein kann.

Das Formwerkzeug 1000 umfasst ferner eine Betätigungseinrichtung 400, welche mit dem zweiten Formeinsatzabschnitt 120 gekoppelt ist. Die Betätigungseinrichtung 400 ist dazu ausgebildet, das zweite Formeinsatzteil 120 zwischen einer Formposition und Entformungsposition hin und her zu bewegen, wie weiter unten noch im Detail beschrieben wird. Die Betätigungseinrichtung 400 ist gemäß der in Figur 1 gezeigten Implementierung pneumatisch ausgebildet. Sie umfasst eine Zylinder-Kolben-Einrichtung mit einem in einem Zylinder 410 axial bewegbar aufgenommenen Kolben 420, wobei der Kolben 420 durch Einleitung von Druckluft im Zylinder 410 bewegt werden kann. Die Zylinder-Kolben-Einrichtung ist hierfür mit einem Druckluftkreis verbunden (in Figur 1 durch Leitung 402 lediglich angedeutet), der Druckluft bedarfsweise zuführt bzw. vom Zylinder 420 wieder abführt. Der Druckluftkreis kann mit einer außerhalb des Formwerkzeugs 1000 angeordneten Druckluftquelle pneumatisch gekoppelt sein. Um die Rückstellung des Kolbens 420 nach Abführen der Druckluft im Zylinder 410 zu fördern, kann die Betätigungseinrichtung 400 ferner eine Federeinrichtung aufweisen, welche in axialer Bewegungsrichtung des Kolbens 420 zwischen dem Kolben 420 und der dem Kolben 420 gegenüberliegend angeordneten Innenwand des Zylinders 410 eingespannt ist (in Figur 1 nicht dargestellt). Bei Bewegung des Kolbens 420 mittels der zugeführten Druckluft baut sich an der Feder eine zur Druckkraft am Kolben 420 entgegengerichtete Federkraft weiter auf. Diese Federkraft vermag den Kolben 420 in seine Ausgangsposition zurückzubewegen, sobald der Druck im Zylinder 410 (Zylinderkammer) abgebaut wird.

Die Betätigungseinrichtung 400 umfasst ferner ein Übertragungselement 430, das an einem Ende mit dem Kolben 420 und am anderen Ende mit einer Lagereinrichtung 440 mechanisch gekoppelt ist.

Die Lagereinrichtung 440 ist dazu ausgebildet, den zweiten Formeinsatzabschnitt 120 beweglich zu lagern. Die Lagereinrichtung 440 ist an ihrem ersten Ende (unteres Ende in Figur 1) mit dem Kolben 420 gekoppelt und nimmt an ihrem axial gegenüberliegenden zweiten Ende das zweite Formeinsatzteil 120 lagernd auf.

Wie ferner aus der Figur 1 ersichtlich wird, ist die Lagereinrichtung 440 hülsenförmig ausgebildet. Die Lagerhülse 440 umgibt das stationär gelagerte erste Formeinsatzteil 110 und den Formboden 200. Bei Betätigung der Lagerhülse 440 bewegt sich diese in axialer Richtung entlang der Außenwand des stationär angeordneten ersten Formeinsatzteils 110. Durch diese Konstruktion wird ein besonders kompakter Betätigungsmechanismus realisiert, der nur wenig Einbauraum beansprucht.

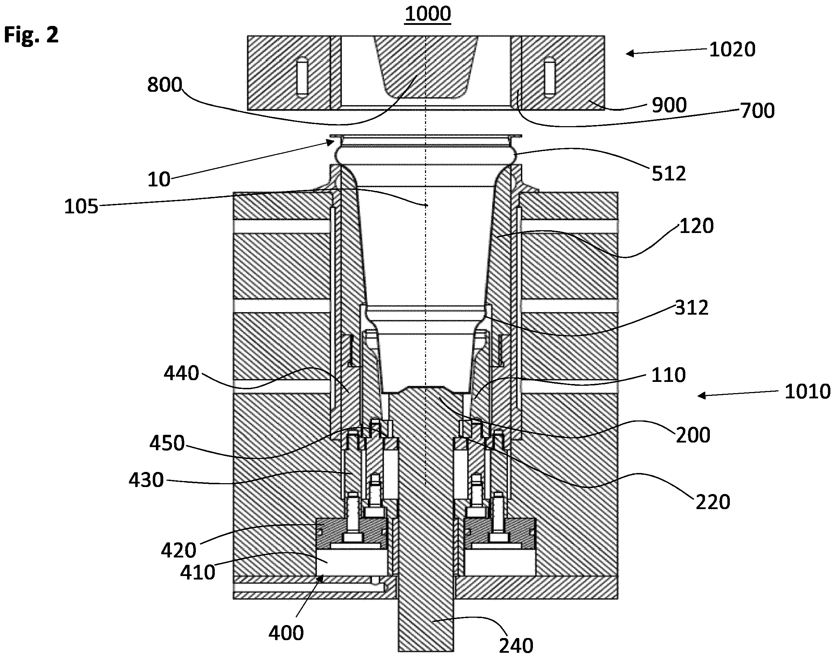

Wie aus der Figur 1 ferner ersichtlich wird, weist die Lagereinrichtung 440 an ihrem unteren Ende ein Mitführelement 450 auf. Das Mitführelement 450 ist unterhalb des ersten Formeinsatzteils 110 angeordnet und ragt derart radial (also senkrecht zur axialen Richtung) nach innen, dass es mit der Rückseite des Formbodens 200 in Kontakt kommt. Der Formboden 200 weist an seiner dem Formraum 300 abgewandten Rückseite am Übergang zu einem Auswerferstößel 240 eine (ringförmige) Schulter 220 auf, mit der der Formboden 200 am Mitführelement 450 aufliegt. Dadurch wird es möglich, durch Betätigung der Zylinder-Kolben-Einrichtung 410, 420, den Formboden 200 und das zweite Formeinsatzteil 120 gemeinsam (und synchron) in axialer Richtung nach oben zu bewegen (also anzuheben). Diese Entformbewegung durch gleichzeitiges Anheben von Formboden 200 und zweitem Formeinsatzteil 120 wird in Zusammenhang mit der Figur 2 weiter unten noch näher beschrieben.

Andererseits kann durch das hier beschriebene Design der Lagereinrichtung 440 mit Bodenmitführelement 450 die Entformungsbewegung, insbesondere der Beginn der Entformungsbewegung von Formboden 200 und zweitem Formeinsatzteil 120 über den Formboden 200 bzw. über den mit dem Formboden 200 gekoppelten Auswerferstößel 240 weiter gesteuert werden. Denkbar ist beispielsweise, dass mittels des Auswerferstößels 240 die axiale Entformungsbewegung des Formbodens 200 sowie die axiale Entformungsbewegung des zweiten Formeinsatzteils 120 (dieses ist über die Lagereinrichtung 440 und dem Mitführelement 450 mit dem Formboden 200 gekoppelt) bis zum Aufbau eines vorgegebenen Schwellendruckes in der Betätigungseinrichtung 400 blockiert wird. Erst mit Erreichen des vorgegebenen Schwellendruckes in der Zylinder-Kolben-Einrichtung 410, 420 wird die Entformungsbewegung ausgelöst. Durch den hier beschriebene Blockiermechanismus kann der Beginn der Entformungsbewegung gesteuert werden. Insbesondere kann sichergestellt werden, dass in einem Formwerkzeug mit einer Vielzahl von parallel angeordneten Formeinsätzen, die Entformungsbewegung für jeden Formeinsatz erst mit Erreichen desselben Schwellendruckes und somit im Wesentlichen gleichzeitig einsetzt.

Wie ferner aus der Figur 1 hervorgeht, weist das Formwerkzeug 1000 ein Formwerkzeugunterteil 1010 und ein Formwerkzeugoberteil 1020 auf. Die oben beschriebenen Formeinsatzteile 110, 120, die hülsenförmige Lagereinrichtung 440 und der Schnittstempel 500 sind in einer Aussparung (Bohrung) 600 des Formwerkzeugunterteils 1010 aufgenommen. Axial unterhalb der beiden Formeinsatzteile 110, 120 ist die Betätigungseinrichtung 400 angeordnet. Das hier beschriebene Design ist platzsparend und weist eine geringe horizontale Ausdehnung aus, wodurch eine Vielzahl von Formeinsätzen nebeneinander in einem Werkzeug eingebaut werden können.

Das Formwerkzeugoberteil 1020 weist eine mit dem Schnittstempel 500 zusammenwirkende Schnittplatte 900 sowie einen Niederhalter 700 auf. Ferner umfasst das Formwerkzeugoberteil 1020 einen Vorstrecker 800, welcher bezüglich des Niederhalters 700 axial beweglich gelagert ist und in den Formraum 300 hineinbewegbar ist. Dadurch kann eine zwischen dem Werkzeugunterteil 1010 und dem Formwerkzeugoberteil 1020 angeordnete Materialbahn, insbesondere eine thermoplastische Folie, in den Formraum 300 gedrückt und somit vorgeformt werden. Dieser Vorgang ist in der Figur 1 nicht dargestellt. Vielmehr zeigt die Figur 1 den bereits ausgeformten Behälter 10 nach Beendigung des Formprozesses, wobei das Formwerkzeugoberteil 1020 vom Formwerkzeugunterteil 1010 wegbewegt ist, und der Vorstrecker 800 sich in seiner zurückbewegten Position befindet. Alternativ ist auch denkbar, dass das Formwerkzeug 1000 keinen Vorstrecker 800 aufweist und die thermoplastische Folie mittels Druckluft oder Vakuum in den Formraum 300 hineingeformt wird.

In der in der Figur 1 dargestellten Konfiguration befindet sich der beweglich gelagerte Formboden 200 sowie das zweite Formeinsatzteil 120 in einer Formposition (d.h. in einer Grundstellung), bei der die Formung des Behälters 10 erfolgt. In dieser Formposition befindet sich der Formboden 200 am dem zweiten Formeinsatzteil 120 axial gegenüberliegenden Ende des ersten Formeinsatzteils 110. Er begrenzt den Hohlraum 300 an seinem unteren axialen Ende. Ferner ist das zweite Formeinsatzteil 120 relativ zum ersten Formeinsatzteil 110 in axialer Richtung derart positioniert, dass die Formseitenwand 112 des ersten Formeinsatzteils 110 im Wesentlichen nahtlos in die Formseitenwand 122 des zweiten Formeinsatzteils 120 übergeht. Die beiden Formeinsatzteile 110, 120 bilden somit einen Formraum 300 mit einer in axialer Richtung durchgehenden Formseitenwand. In der in der Figur 1 gezeigten beispielhaften Ausgestaltung weist der Formraum 300 entlang seiner Seitenwand zwei in Umlaufsrichtung des Formraums 300 durchgehend ausgebildete Hinterschnitte auf. Ein erster Hinterschnitt 312 ist am oberen Ende der ersten Formseitenwand 112 ausgebildet. Ein zweiter Hinterschnitt 512 ist am Übergang zwischen der zweiten Formseitenwand 122 und dem Schnittstempel 500 ausgebildet. Dementsprechend weist der erzeugte Behälter 10 zwei Hinterschnitte auf, die in Umlaufrichtung des Behälters 10 durchgehend ausgebildet sind, wobei ein erster Hinterschnitt in der Nähe der Behälteröffnung und ein zweiter Hinterschnitt in der Nähe des Behälterbodens ausgebildet ist.

In Zusammenhang mit der Figur 2 wird die Entformung des geformten Behälters 10 mit zwei in Umlaufrichtung verlaufenden Hinterschnitten 312, 512 erläutert. Figur 2 zeigt eine Schnittansicht des in Figur 1 gezeigten Formwerkzeugs 1000 während der Entformung des Behälters 10. Der einzige Unterschied zwischen der Schnittansicht in Figur 1 und Figur 2 besteht darin, dass durch Betätigung der Zylinder-Kolben-Einrichtung 410, 420 die damit gekoppelte Lagereinrichtung 440 (um einen vorgegebenen Betrag) axial nach oben verschoben wurde. Diese Verschiebung der Lagereinrichtung 440 bewirkt eine axiale Verschiebung (Hubbewegung) des zweiten Formeinsatzteils 120 und des Bodens 200 relativ zum stationär gelagerten ersten Formeinsatzteil 110. Durch diese axiale Verschiebung wird bewirkt, dass der im Formraum 300 ausgeformte Behälter 10 von der Formseitenwand des unteren wie auch des oberen Formeinsatzabschnitts 110, 120 gleichmäßig entformt wird. Denn die Bewegung des zweiten Formeinsatzteils 120 axial nach oben unterstützt die Entformung des Behälters 10 im oberen Bereich, insbesondere im Bereich des oberen Hinterschnitts 512. Insbesondere bewirkt die Abrundung am axialen oberen Ende des beweglich gelagerten zweiten Formeinsatzteils 120, dass bei der Hubbewegung des zweiten Formeinsatzteils 122 die Behälterwand am ersten Hinterschnitt 512 leicht nach innen gedrückt wird, wodurch die Entformung des Behälters 10 in diesem Bereich unterstützt wird. Die Entformung im unteren Behälterbereich mit dem zweiten Hinterschnitt 312 wird durch den Bodenhub unterstützt.

Gemäß einer Weiterentwicklung kann die durch Betätigung der oben beschriebenen Zylinder-Kolben-Einrichtung 410, 420 eingeleitete Entformungsbewegung von zweitem Formeinsatzteil 120 und Formboden 200 dahingehend weiter gesteuert werden, dass die Entformungsbewegung erst nach Erreichen eines vorgegeben Schwellendruckes im Zylinder 410 einsetzt. Diese Steuerung kann beispielsweise über den Auswerferstößel 240 erfolgen, welcher derart angesteuert werden kann, dass er den Formboden 200 und den mit den Formboden 200 über die Lagereinrichtung 440 gekoppelten zweiten Formeinsatzteil 120 in seiner Entformungsbewegung solange blockiert, bis sich in der Zylinder-Kolben-Einrichtung ein vorgegebener Betätigungsdruck (Schwellendruck) aufgebaut hat.

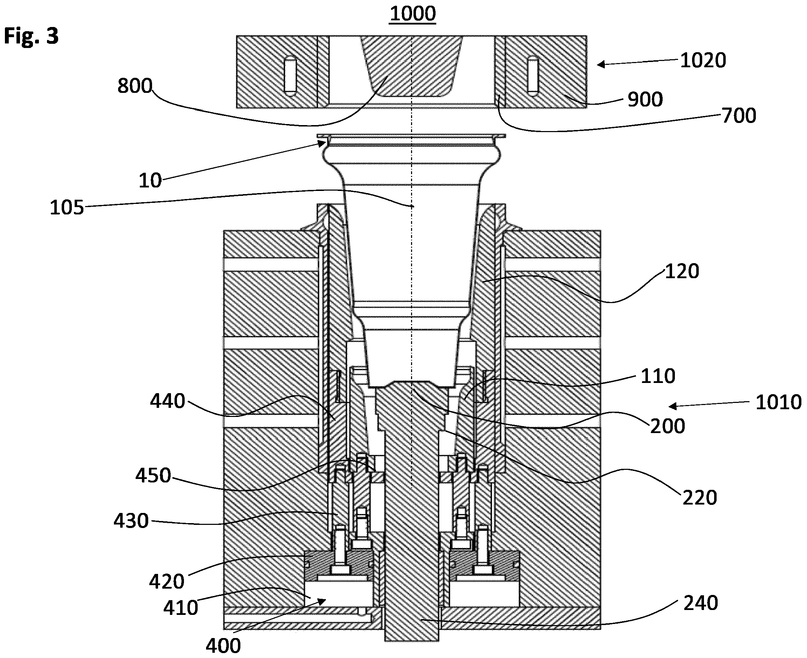

In Zusammenhang mit der Figur 3 wird der Auswurf des entformten Behälters 10 weiter gezeigt. Nachdem der Formboden 200 sowie das zweite Formeinsatzteil 122 die Entformungsposition zur Entformung des Behälters 10 eingenommen haben (siehe Figur 2), wird der Formboden 120 mit Hilfe des Auswerferstößels 240 weiter angehoben. Durch diese weitere Hubbewegung des Formbodens 200 kann der Behälter 10 aus dem Formraum 300 ausgeworfen werden. Nach dem Behälterauswurf wird der Formboden 200 mit Hilfe des Auswerferstößels in die Formposition (Grundstellung) zurückbewegt. Durch die Bewegung des Formbodens 200 nach unten (also zurück in die Formposition) kommt der Formboden 200 wieder in Kontakt mit dem Mitführelement 450 der Lagereinrichtung 440, wodurch die Lagereinrichtung 440 und somit das zweite Formeinsatzteil 120 bis zur Formposition (Grundstellung -> siehe Figur 1) zurückbewegt wird.

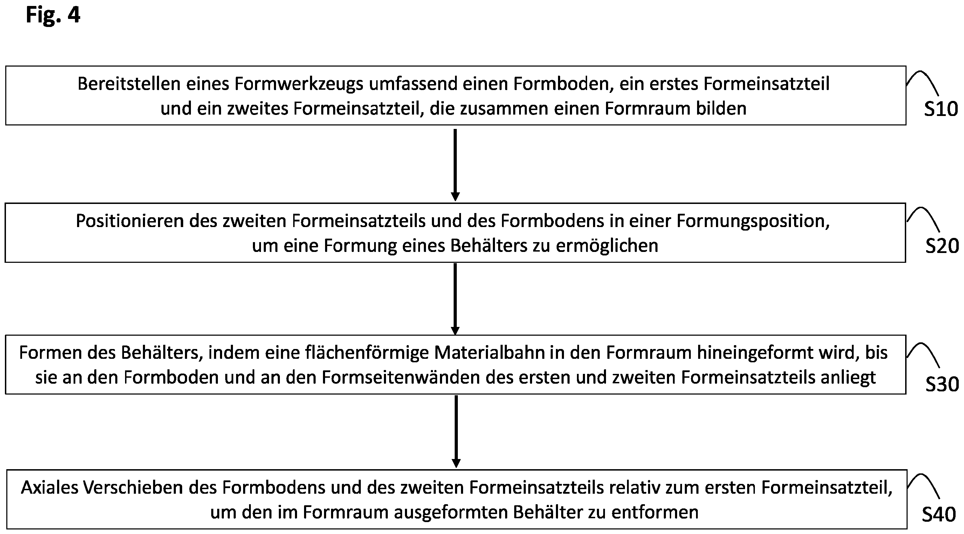

In Zusammenhang mit der Figur 4 wird nun ein Verfahren zur Herstellung eines Behälters mit Hilfe eines Formwerkzeugs 1000, wie in Zusammenhang mit den Figuren 1 bis 3 oben ausgeführt, weiter beschrieben.

Das Verfahren umfasst in einem ersten Schritt S10 ein Bereitstellen eines Formwerkzeugs. Dieses Formwerkzeug umfasst einen Formboden, ein erstes Formeinsatzteil sowie ein zweites Formeinsatzteil, die zusammen einen Formraum bilden. Der Formraum wird durch eine durch das erste Formeinsatzteil und zweite Formeinsatzteil gebildete Formseitenwand definiert. Wie bereits in Zusammenhang mit den Figuren 1 bis 3 beschrieben, ist der Formboden sowie das zweite Formeinsatzteil relativ zu dem ersten Formeinsatzteil beweglich gelagert.

In einem zweiten Schritt S20 werden das zweite Formeinsatzteil und der Formboden in einer Formposition positioniert, welche eine Formung des Behälters ermöglicht. In dieser Formposition befindet sich der Formboden in einem unteren axialen Ende des ersten Formeinsatzteils angeordnet. Er begrenzt den Formraum 300 in axialer Richtung. Ferner sind in der Formposition das erste Formeinsatzteil und das zweite Formeinsatzteil derart zueinander angeordnet, dass eine erste Formseitenwand des ersten Formeinsatzteils im Wesentlichen nahtlos in eine zweite Formseitenwand des zweiten Formeinsatzteils übergeht und somit eine einheitliche Formseitenwand gebildet wird.

In einem weiteren Schritt S30 wird der Behälter geformt, indem eine flächenförmige Materialbahn (beispielsweise eine thermoplastische Kunststofffolie) in den Formraum hineingeformt (tiefgezogen) wird, bis die Materialbahn an den Formboden und an den Formseitenwänden des ersten und zweiten Formeinsatzteils anliegt. Es entsteht somit ein Behälter, welcher die Form des Formraums, insbesondere des Formbodens und der Formseitenwände, annimmt.

In einem darauffolgenden weiteren Schritt S40 wird der ausgeformte Behälter von den Formseitenwänden und dem Formboden entformt. Dies geschieht durch axiales Verschieben des Formbodens und des zweiten Formeinsatzteils entgegen der Tiefziehrichtung. Der erste Formeinsatzteil bleibt hierbei unbewegt.

Das hier beschriebene Formwerkzeug sowie Formverfahren hat den Vorteil, dass Behälter mit hohen Seitenwänden und Hinterschnitten zuverlässig und sicher entformt werden können. Die Behälterentformung wird gemäß der vorliegenden Erfindung durch Bewegung des Formbodens und des zweiten Formeinsatzteils relativ zum ersten Formeinsatzteil initiiert bzw. unterstützt.

## Patentansprüche

1. Formwerkzeug (1000), insbesondere Thermoformwerkzeug, zur Erzeugung eines Behälters (10), umfassend einen Formboden (200) und einen den Formboden (200) aufnehmenden Formeinsatz (100),
wobei der Formeinsatz (100) aus wenigstens zwei Formeinsatzteilen (110, 120) aufgebaut ist, die zusammen mit dem Formboden (200) einen Formraum (300) definieren, der zur Umformung einer flächenförmigen Materialbahn zu einem Behälter (10) vorgesehen ist,
wobei ein erstes Formeinsatzteil (110) der wenigstens zwei Formeinsatzteile (110, 120) im Formwerkzeug (1000) stationär gelagert ist, ein zweites Formeinsatzteil (120) der wenigstens zwei Formeinsatzteile (110, 120) im Formwerkzeug (1000) axial bewegbar gelagert ist, und der Formboden (200) axial bewegbar an einem dem zweiten Formeinsatzteil (120) abgewandten axialen Ende des ersten Formeinsatzteils (110) aufgenommen ist, so dass der Formboden (200) und das zweite Formeinsatzteil (120) relativ zum ersten Formeinsatzteil (110) axial bewegbar sind, um einen im Formraum (300) ausgeformten Behälter (10) zu entformen.

2. Formwerkzeug (1000) nach Anspruch 1, wobei das zweite Formeinsatzteil (120) derart bezüglich des ersten Formeinsatzteils (110) axial verschiebbar gelagert ist, dass es wahlweise zwischen einer Formposition und einer Entformungsposition hin und her bewegbar ist.

3. Formwerkzeug (1000) nach Anspruch 2, wobei in der Formposition das erste Formeinsatzteil (110) im Wesentlichen nahtlos in das zweite Formeinsatzteil (120) übergeht.

4. Formwerkzeug (1000) nach Anspruch 2 oder 3, wobei in der Entformungsposition das zweite Formeinsatzteil (120) um einen vorgegebenen Betrag bezüglich des ersten Formeinsatzteils (110) axial verschoben ist.

5. Formwerkzeug (1000) nach einem der vorhergehenden Ansprüche, wobei das erste Formeinsatzteil (110) eine erste Formseitenwand (112) und das zweite Formeinsatzteil (120) eine zweite Formseitenwand (122) aufweisen, wobei die beiden Formseitenwände (112, 122) derart ausgebildet sind, dass sie in einer Formposition im Wesentlichen nahtlos ineinander übergehen.

6. Formwerkzeug (1000) nach Anspruch 5, wobei die zweite Formseitenwand (122) relativ zur ersten Formseitenwand (112) um einen vorgegebenen Betrag axial bewegbar ist.

7. Formwerkzeug (1000) nach einem der vorhergehenden Ansprüche, wobei das erste Formeinsatzteil (110) und/oder zweite Formeinsatzteil (120) einen sich in Umlaufrichtung erstreckenden Hinterschnitt aufweist.

8. Formwerkzeug (1000) nach einem der vorhergehenden Ansprüche, wobei das zweite Formeinsatzteil (120) an seinem dem ersten Formeinsatzteil (110) abgewandten axialen Ende abgerundet ausgebildet ist.

9. Formwerkzeug (1000) nach einem der vorhergehenden Ansprüche, wobei der Formboden (200) und das zweite Formeinsatzteil (120) derart im Formwerkzeug (1000) gelagert sind, dass sie zwischen der Formposition und der Entformungsposition axial hin und her bewegbar sind.

10. Formwerkzeug (1000) nach einem der vorhergehenden Ansprüche, ferner umfassend eine Betätigungseinrichtung (400), welche dazu ausgebildet ist, das zweite Formeinsatzteil (120) wahlweise zwischen der Formposition und der Entformungsposition hin und her zu verschieben.

11. Formwerkzeug (1000) nach Anspruch 10, wobei die Betätigungseinrichtung (400) ferner dazu ausgebildet ist, den Formboden (200) synchron oder asynchron mit dem zweiten Formeinsatzteil (120) zwischen der Formposition und der Entformungsposition hin und her zu verschieben.

12. Formwerkzeug (1000) nach einem der Ansprüche 1 bis 11, ferner umfassend eine mit dem Formboden (200) gekoppelte Auswerfereinrichtung, welche dazu ausgebildet ist, nach Entformung des Behälters (10) den Formboden (200) weiter in Richtung des Formraums (300) zu verschieben, um den Behälter (10) auszuwerfen.

13. Formwerkzeug (1000) nach Anspruch 12, wobei die Betätigungseinrichtung (400) eine Zylinder-Kolben-Einrichtung (410, 420) und eine Federeinrichtung umfasst, die in der Zylinder-Kolben-Einrichtung (410, 420) dazu angeordnet ist, den Kolben (420) nach Betätigung in seine Ausgangsposition zurückzubewegen.

14. Formwerkzeug (1000) nach einem der vorhergehenden Ansprüche, wobei der Formeinsatz (100) und der Formboden (200) Teil eines Werkzeugunterteils (1010) sind, und wobei das Formwerkzeug (1000) ferner ein mit dem Werkzeugunterteil (1010) zusammenwirkendes Werkzeugoberteil (1020) aufweist.

15. Formmaschine, insbesondere Thermoformmaschine, umfassend das Formwerkzeug (1000) nach einem der Ansprüche 1 bis 14.

16. Verwendung eines Formwerkzeugs (1000) nach einem der Ansprüche 1 bis 14 zur Herstellung eines Behälters (10) aus einer flächenförmigen Materialbahn.

17. Verfahren zum Herstellen eines Behälters (10) aus einer flächenförmigen Materialbahn, wobei das Verfahren folgende Schritte umfasst:
- Bereitstellen eines Formwerkzeugs (1000), wobei das Formwerkzeug (1000) einen Formboden (200), ein erstes Formeinsatzteil (110) und ein zweites Formeinsatzteil (120) umfasst, die einen Formraum (300) mit einer Formseitenwand (302) bilden, wobei der Formboden (200) an einem dem zweiten Formeinsatzteil (120) abgewandten axialen Ende des ersten Formeinsatzteils (110) axial bewegbar aufgenommen ist;
- Positionieren des zweiten Formeinsatzteils (120) und des Formbodens (200) des Formwerkzeugs (1000) in einer Formposition, um eine Formung des Behälters (10) zu ermöglichen;
- Formen des Behälters (10), indem eine flächenförmige Materialbahn in den Formraum (300) des Formwerkzeugs (1000) hineingeformt wird, bis sie an dem Formboden (200) und der Formseitenwand (102) des Formeinsatzes (100) anliegt; und
- axiales Bewegen des Formbodens (200) und des zweiten Formeinsatzteils (120) relativ zum ersten Formeinsatzteil (110), um den im Formraum (300) ausgeformten Behälter (10) zu entformen.

18. Verfahren nach Anspruch 17, wobei der Formboden (200) und das zweite Formeinsatzteil (120) synchron oder asynchron zueinander um einen vorgegebenen Betrag in axialer Richtung bewegt werden, um den Behälter (10) zu entformen.

19. Verfahren nach Anspruch 18, wobei der Formboden (200) nach Erreichen der Entformungsstellung weiter in Richtung des Formraums (300) bewegt wird, um den entformten Behälter (10) auszuwerfen.

## Claims

1. Molding tool (1000), in particular thermoforming tool, for producing a container (10), comprising a mold bottom (200) and a mold insert (100) receiving the mold bottom (200),
wherein the mold insert (100) is constructed of at least two mold insert parts (110, 120) that together with the mold bottom (200) define a cavity (300) provided for reshaping a two-dimensional web of material into a container (10),
wherein a first mold insert part (110) of the at least two mold insert parts (110, 120) is mounted stationary in the molding tool (1000), a second mold insert part (120) of the at least two mold insert parts (110, 120) is mounted axially movable in the molding tool (1000), and the mold bottom (200) is received axially movably at an axial end of the first mold insert part (110) facing away from the second mold insert part (120), so that the mold bottom (200) and the second mold insert part (120) can be moved axially relative to the first mold insert part (110) in order to demold a container (10) molded in the cavity (300).

2. Molding tool (1000) according to claim 1, wherein the second mold insert part (120) is mounted axially displaceable with respect to the first mold insert part (110) such that it is selectively movable back and forth between a molding position and a demolding position.

3. Molding tool (1000) according to claim 2, wherein in the molding position the first mold insert part (110) transitions essentially seamlessly into the second mold insert part (120).

4. Molding tool (1000) according to claim 2 or 3, wherein in the demolding position the second mold insert part (120) is axially displaced by a predetermined amount relative to the first mold insert part (110).

5. Molding tool (1000) according to one of the preceding claims, wherein the first mold insert part (110) has a first mold side wall (112) and the second mold insert part (120) has a second mold side wall (122), wherein the two mold side walls (112, 122) are formed such that in a molding position they transition essentially seamlessly into one another.

6. Molding tool (1000) according to claim 5, wherein the second mold side wall (122) is axially movable by a predetermined amount relative to the first mold side wall (112).

7. Molding tool (1000) according to one of the preceding claims, wherein the first mold insert part (110) and/or the second mold insert part (120) have an undercut extending circumferentially.

8. Molding tool (1000) according to one of the preceding claims, wherein the second mold insert part (120) has a rounded axial end facing away from the first mold insert part (110).

9. Molding tool (1000) according to one of the preceding claims, wherein the mold bottom (200) and the second mold insert part (120) are mounted in the molding tool (1000) such that they can be moved back and forth axially between the molding position and the demolding position.

10. Molding tool (1000) according to one of the preceding claims, further comprising an actuating device (400) that is formed to selectively displace the second mold insert part (120) back and forth between the molding position and the demolding position.

11. Molding tool (1000) according to claim 10, wherein the actuating device (400) is further formed to displace the mold bottom (200) back and forth between the molding position and the demolding position, synchronously or asynchronously with the second mold insert part (120).

12. Molding tool (1000) according to one of claims 1 to 11, further comprising an ejecting device coupled to the mold bottom (200), which is formed to displace the mold bottom (200) further in the direction of the cavity (300) after the container (10) has been demolded in order to eject the container (10).

13. Molding tool (1000) according to claim 12, wherein the actuating device (400) comprises a cylinder-piston device (410, 420) and a spring device that is arranged in the cylinder-piston device (410, 420) to move the piston (420) to its starting position after actuation.

14. Molding tool (1000) according to one of the preceding claims, wherein the mold insert (100) and the mold bottom (200) are part of a lower tool part (1010), and wherein the molding tool (1000) further has an upper tool part (1020) cooperating with the lower tool part (1010).

15. Molding machine, in particular thermoforming machine, comprising the molding tool (1000) according to one of claims 1 to 14.

16. Use of a forming tool (1000) according to one of claims 1 to 14 for producing a container (10) from a two-dimensional web of material.

17. Method for producing a container (10) from a two-dimensional web of material, wherein the method comprises the following steps:
providing a molding tool (1000), wherein the molding tool (1000) comprises a mold bottom (200), a first mold insert part (110), and a second mold insert part (120) which form a cavity (300) having a mold side wall (302), wherein the mold bottom (200) is received axially movably at an axial end of the first mold insert part (110) facing away from the second mold insert part (120);
positioning the second mold insert part (120) and the mold bottom (200) of the molding tool (1000) in a molding position in order to permit molding of the container (10);
molding the container (10) in that a two-dimensional web of material is molded in the cavity (300) of the molding tool (1000) until it is positioned against the mold bottom (200) and mold side wall (102) of the mold insert (100); and,
axially moving the mold bottom (200) and the second mold insert part (120) relative to the first mold insert part (110) in order to demold the container (10) molded in the cavity (300).

18. Method according to claim 17, wherein the mold bottom (200) and the second mold insert part (120) are moved axially by a predetermined amount, synchronously or asynchronously with one other, in order to demold the container (10).

19. Method according to claim 18, wherein after the demolding position is attained, the mold bottom (200) is moved further towards the cavity (300) in order to eject the demolded container (10).

## Revendications

1. Outil de moulage (1000), en particulier outil de thermoformage, pour la production d'un récipient (10), comportant un fond de moule (200) et un insert de moule (100) recevant le fond de moule (200),
dans lequel l'insert de moule (100) est constitué d'au moins deux parties d'insert de moule (110, 120) qui définissent conjointement avec le fond de moule (200) un espace de moulage (300), lequel est prévu pour la transformation d'une bande de matériau de forme plane en un récipient (10),
dans lequel une première partie d'insert de moule (110) parmi les au moins deux parties d'insert de moule (110, 120) est montée fixe dans l'outil de moulage (1000), une deuxième partie d'insert de moule (120) parmi les au moins deux parties d'insert de moule (110, 120) est montée axialement mobile dans l'outil de moulage (1000), et le fond de moule (200) est reçu axialement mobile au niveau d'une extrémité axiale de la première partie d'insert de moule (110) opposée à la deuxième partie d'insert de moule (120) de sorte que le fond de moule (200) et la deuxième partie d'insert de moule (120) soient axialement mobiles par rapport à la première partie d'insert de moule (110) afin de démouler un récipient (10) façonné dans l'espace de moulage (300).

2. Outil de moulage (1000) selon la revendication 1, dans lequel la deuxième partie d'insert de moule (120) est montée axialement coulissante par rapport à la première partie d'insert de moule (110) de telle sorte qu'elle soit mobile en va-et-vient facultativement entre une position de moulage et une position de démoulage.

3. Outil de moulage (1000) selon la revendication 2, dans lequel, dans la position de moulage, la première partie d'insert de moule (110) se prolonge essentiellement sans soudure dans la deuxième partie d'insert de moule (120).

4. Outil de moulage (1000) selon la revendication 2 ou la revendication 3, dans lequel, dans la position de démoulage, la deuxième partie d'insert de moule (120) est amenée à coulisser axialement dans une mesure prédéfinie par rapport à la première partie d'insert de moule (110).

5. Outil de moulage (1000) selon l'une des revendications précédentes, dans lequel la première partie d'insert de moule (110) comprend une première paroi latérale de moule (112) et la deuxième partie d'insert de moule (120) comprend une deuxième paroi latérale de moule (122), dans lequel les deux parois latérales de moule (112, 122) sont conçues de telle sorte que, dans une position de moulage, elles se confondent essentiellement sans soudure.

6. Outil de moulage (1000) selon la revendication 5, dans lequel la deuxième paroi latérale de moule (122) est axialement mobile dans une mesure prédéfinie par rapport à la première paroi latérale de moule (112).

7. Outil de moulage (1000) selon l'une des revendications précédentes, dans lequel la première partie d'insert de moule (110) et/ou la deuxième partie d'insert de moule (120) comprennent une contre-dépouille s'étendant dans la direction circonférentielle.

8. Outil de moulage (1000) selon l'une des revendications précédentes, dans lequel la deuxième partie d'insert de moule (120) est de conception arrondie au niveau de son extrémité axiale opposée à la première partie d'insert de moule (110).

9. Outil de moulage (1000) selon l'une des revendications précédentes, dans lequel le fond de moule (200) et la deuxième partie d'insert de moule (120) sont montés dans l'outil de moulage (1000) de telle sorte qu'ils soient axialement mobiles en va-et-vient entre la position de moulage et la position de démoulage.

10. Outil de moulage (1000) selon l'une des revendications précédentes, comportant en outre un dispositif d'actionnement (400), lequel est conçu pour faire coulisser la deuxième partie d'insert de moule (120) en va-et-vient facultativement entre la position de moulage et la position de démoulage.

11. Outil de moulage (1000) selon la revendication 10, dans lequel le dispositif d'actionnement (400) est en outre conçu pour faire coulisser le fond de moule (200) de manière synchrone ou asynchrone avec la deuxième partie d'insert de moule (120) en va-et-vient entre la position de moulage et la position de démoulage.

12. Outil de moulage (1000) selon l'une des revendications 1 à 11, comportant en outre un dispositif d'éjection accouplé au fond de moule (200), lequel dispositif d'éjection est conçu pour faire coulisser, après démoulage du récipient (10), le fond de moule (200) plus loin en direction de l'espace de moulage (300) afin d'éjecter le récipient (10).

13. Outil de moulage (1000) selon la revendication 12, dans lequel le dispositif d'actionnement (400) comporte un dispositif à cylindre-piston (410, 420) et un dispositif à ressort, lequel est disposé dans le dispositif à cylindre-piston (410, 420) pour faire revenir le piston (420) après actionnement dans sa position de départ.

14. Outil de moulage (1000) selon l'une des revendications précédentes, dans lequel l'insert de moule (100) et le fond de moule (200) font partie d'une partie inférieure d'outil (1010), et l'outil de moulage (1000) comprenant en outre une partie supérieure d'outil (1020) coopérant avec la partie inférieure d'outil (1010).

15. Machine de moulage, en particulier machine de thermoformage, comportant l'outil de moulage (1000) selon l'une des revendications 1 à 14.

16. Utilisation d'un outil de moulage (1000) selon l'une des revendications 1 à 14 pour la fabrication d'un récipient (10) à partir d'une bande de matériau de forme plane.

17. Procédé de fabrication d'un récipient (10) à partir d'une bande de matériau de forme plane, le procédé comportant les étapes suivantes :
- fourniture d'un outil de moulage (1000), dans lequel l'outil de moulage (1000) comporte un fond de moule (200), une première partie d'insert de moule (110) et une deuxième partie d'insert de moule (120), lesquels forment un espace de moulage (300) avec une paroi latérale de moule (302), dans lequel le fond de moule (200) est reçu axialement mobile au niveau d'une extrémité axiale de la première partie d'insert de moule (110) opposée à la deuxième partie d'insert de moule (120) ;
- positionnement de la deuxième partie d'insert de moule (120) et du fond de moule (200) de l'outil de moulage (1000) dans une position de moulage afin de permettre un moulage du récipient (10) ;
- moulage du récipient (10) du fait qu'une bande de matériau de forme plane est creusée dans l'espace de moulage (300) de l'outil de moulage (1000) jusqu'à ce qu'elle repose au niveau du fond de moule (200) et de la paroi latérale de moule (102) de l'insert de moule (100) ; et
- déplacement axial du fond de moule (200) et de la deuxième partie d'insert de moule (120) par rapport à la première partie d'insert de moule (110) afin de démouler le récipient (10) façonné dans l'espace de moulage (300).

18. Procédé selon la revendication 17, dans lequel le fond de moule (200) et la deuxième partie d'insert de moule (120) sont déplacés de manière synchrone ou asynchrone l'un avec l'autre dans une mesure prédéfinie dans la direction axiale afin de démouler le récipient (10).

19. Procédé selon la revendication 18, dans lequel le fond de moule (200), après avoir atteint l'emplacement de démoulage, est déplacé plus loin en direction de l'espace de moulage (300) afin d'éjecter le récipient (10) démoulé.
